# EUROPÄISCHE PATENTSCHRIFT

(11) **EP 1 882 354 B1**
(45) Veröffentlichungstag und Bekanntmachung des Hinweises auf die Patenterteilung: **25.04.2012**
(21) Anmeldenummer: 06707172.0
(22) Anmeldetag: 22.02.2006
(51) Int. Cl.: H04M 1/725

(54) **MOBILES ENDGERÄT ZUR NUTZUNG IN TELEKOMMUNIKATIONSNETZEN**
MOBILE TERMINAL FOR USE IN TELECOMMUNICATION NETWORKS
TERMINAL MOBILE DESTINE A UN USAGE DANS DES RESEAUX DE TELECOMMUNICATION

(30) Priorität: 20.05.2005 DE 102005023959
(43) Veröffentlichungstag der Anmeldung: 30.01.2008
(73) Patentinhaber: Vodafone Holding GmbH, 40213 Düsseldorf (DE)
(72) Erfinder: FOLEY, Peter, St. Albans, AL3 5LG (GB); LISS, Peter, 11523 Stockholm (SE); DE VOS, Geert, B-1730 Asse (BE); BURHOLT, Adrian, Bromham, Wiltshire SN 15 2DW (DE); LAPUSNEANU, Alina, 40213 Düsseldorf (DE); GRAHAM, Pullin, London ECIR 5DF (GB)
(74) Vertreter: Weisbrodt, Bernd
(86) Internationale Anmeldenummer: PCT/EP2006/001609
(87) Internationale Veröffentlichungsnummer: WO 2006/122589

(56) Entgegenhaltungen:
- EP-A- 1 162 853
- WO-A-2004/062300
- US-A1- 2002 090 931
- US-A1- 2003 107 500
- US-B1- 6 175 721

## Beschreibung

Die vorliegende Erfindung betrifft ein mobiles Endgerät zur Nutzung in einem Telekommunikationsnetz, vorzugsweise einem Mobilfunknetz, mit wenigstens einer Einrichtung zur optischen, akustischen und/oder vibrierenden Wiedergabe von seitens des Endgerätes nutzbaren Informationen repräsentierenden Signalen, wobei wenigstens einer information wenigstens ein die Information repräsentierendes Signal mit festen und/oder einstellbaren Signalparametern zuordbar ist, und mit einer an einer Gehäuseselte des mobilen Endgerätes angeordneten Schaltelnrichtung, mit welcher die von der Einrichtung zur Wiedergabe von Informationen repräsentierenden Signalen wiederzugebenden Signale einstellbar sind, und welche wenigstens drei Schaltzustände zur Einstellung von wiederzugebenden Signalen aufweist.

Derartige mobile Endgeräte sind im Stand der Technik, beispielsweise aus der US 6,176,726 B1, bekannt .

In der Regel werden dabei eingehende Anrufe und/oder eingehende Mitteilungen eines Nachrichtendienstes eines Telekommunikationsnetzes, beispielsweise sogenannte SMS (Short Messages Service) und/oder MMS (MMS: Multimedia Messages Service), als Kommunikationsinformation akustisch durch sogenannte Klingeltöne beziehungsweise optisch als Logo als ein die Kommunikationsinformation repräsentierendes Signal seitens des mobilen Endgerätes wiedergegeben. Darüber hinaus sind entsprechende seitens des Endgerätes nutzbare Informationen repräsentierende Signale beispielsweise als Erinnerungsfunktion für Termine und/oder als Wecker oder dergleichen Anwendungen nutzbar. In der Regel sind die Signalparameter von Informationen repräsentierenden Signalen, beispielsweise die Lautstärke, die Intensität des Vibrierens, die Anzahl an Signalwiederholungen und dergleichen Signalparameter von Informationen repräsentierenden Signalen zumindest teilweise seitens des mobilen Endgerätes einstellbar, üblicherweise von dem Nutzer des mobilen Endgerätes über seitens des mobilen Endgerätes dazu entsprechend vorgesehene Menüs, Ferner ist es möglich, die Informationen repräsentierenden Signale hinsichtlich bestimmter Kommunikationspartner individuell einzustellen, so dass beispielsweise schon anhand des Klingeltons als Anrufsignal ein bestimmter Kommunikationspartner für den Nutzer des mobilen Endgerätes erkennbar ist. Eine solche Erkennung erfolgt seitens des mobilen Endgerätes üblicherweise anhand der sogenannten Rufnummeridentifikation, wobei die Rufnummer des jeweiligen Kommunikationspartners mit über das Telekommunikationsnetz übertragen wird, sofern der jeweilige Kommunikationspartner diese Funktionalität der Übertragung der eigenen Rufnummer aktiviert hat.

Im täglichen Gebrauch von mobilen Endgeräten, insbesondere Mobilfunktelefonen, sind zahlreiche Situationen gegeben, in denen die Wiedergabe von seitens des Endgerätes nutzbaren Informationen repräsentierenden Signalen seitens des mobilen Endgerätes hinsichtlich der Wiedergabeart der Signale, beispielsweise einer optischen, akustischen und/oder vibrierenden Wiedergabe, als auch hinsichtlich der Signalparameter der Wiedergabe der Signale, beispielsweise der Lautstärke, der Anzahl an Signalwiederholungen oder dergleichen Signalparameter möglichst kurzfristig, schnell und einfach geändert beziehungsweise zur Anpassung an die jeweilige Alltagssituation modifiziert werden muss beziehungsweise sollte, beispielsweise in Besprechungen, Vortragsveranstaltungen, Konzerten oder sonstigen Situationen. Mitunter sind Situationen gegeben, in denen die Wiedergabe von Informationen repräsentierenden Signalen seitens des mobilen Endgerätes zwar störend ist beziehungsweise empfunden wird, allerdings ein Abschalten des mobilen Endgerätes aus Gründen eines wie auch immer gearteten Erreichbarkeitserfordernisses des Nutzers des mobilen Endgerätes nicht möglich beziehungsweise gewünscht ist. In der Regel ist bei mobilen Endgeräten zu diesem Zwecke die Möglichkeit gegeben, die Zuordnung und Wiedergabe von Informationen repräsentierenden Signalen zu modifizieren beziehungsweise zu unterdrücken, beispielsweise im Rahmen einer sogenannten "Stummschaltung", in der insbesondere eine akustische Wiedergabe von Signalen seitens des mobilen Endgerätes abgeschaltet wird.

Nachteilig bei den bisher im Stand der Technik bekannten mobilen Endgeräten ist, dass für ein entsprechendes Modifizieren beziehungsweise Unterdrücken der Wiedergabe von Informationen repräsentierenden Signalen des mobilen Endgerätes in der Regel umfangreiche und aufwändige Eingaben über entsprechende Menüführungen seitens des mobilen Endgerätes erforderlich sind, die insbesondere für ältere und/oder ungeübte Nutzer von mobilen Endgeräten eine entsprechende Bedienung und/oder Handhabung erschweren.

Es sind zwar im Stand der Technik auch mobile Endgeräte bekannt, bei denen am Gehäuse Schalteinrichtungen vorgesehen sind, diese ermöglichen allerdings lediglich eine begrenzte Einstellbarkeit von Signalparametern von Informationen repräsentierenden Signalen und nicht die Einstellbarkeit der Wiedergabeart der Signale selbst. Darüber hinaus sind bei den bisher bekannten mobilen Endgeräten die Möglichkeiten zur Einstellung von Informationen repräsentierenden Signalen, Insbesondere hinsichtlich der Wiedergabeart der wiederzugebenden Signale, in ihrer Funktionalität beschränkt.

Die US 6,175,725 B1 offenbart eine Empfangseinrichtung eines Funkrufempfangssystems, auch als sogenannter Pager bezeichnet. Die Empfangseinrichtung (Pager) weist eine Einrichtung zur optischen, akustischen und/oder vibrierenden Wiedergabe eines Signals auf, welches bei Empfang einer Nachricht seitens der Empfangseinrichtung wiedergebbar ist. Die Empfangseinrichtung weist eine Schalteinrichtung auf, mit welcher die von der Einrichtung zur optischen, akustischen und/oder vibrierenden Wiedergabe bei Eingang einer Nachricht seitens der Empfangseinrichtung (Pager) wiederzugebenden Signale einstellbar sind. Dazu weist die Schalteinrichtung drei Schaltzustände auf.

Die US 2002/0090931 A1 offenbart ein In einem zellularen Mobilfunknetz betrelbbares mobiles Telefon, welches Kommunikationsfunktionen und sogenannte Nicht-Kommunikationsfunktionen ausführen kann. Das Telefon weist an einer Gehäuseseite einen Schalter auf, mit welchem Kommunikationsfunktionen des Telefone außer Betrieb setzbar sind. Mit dem mobilen Telefon soll dabei insbesondere die Möglichkeit bereitgestellt werden, die Nicht-Kommunikationsfunktionen des Telefons an Orten nutzen zu können, wo Kommunikationsfunktionen des Telefons verboten oder nicht erlaubt sind, beispielsweise in Flugzeugen, während eine Nutzung von Nicht-Kommunikationsfunktionen des Telefons an diesen Orten zulässig sind. Ohne den Schalter zur Außerbetriebnahme von Kommunikationsfunktionen des Telefons müsate das Telefon ausgeschaltet werden, wodurch eine Nutzung der Nicht-Kommunikationsfunktionen des Telefons unmöglich wäre.

Die US 2003/0107600 A1 offenbart eine Baugruppe für eine Tastatur, welche für ein mobiles Telefon nutzbar ist. Die Tastatur weist verschiedene Tasten zur Eingabe von Zeichen seitens des Telefons und zur Aktivierung von Funktionen des Telefons auf. Da die Anzahl von zur Verfügung stehenden Tasten einer Tastatur seitens eines mobilen Telefons in der Regel beschränkt sind, sind einzeinen Tasten zur Eingabe von Zeichen mehrere Zeichen zugeordnet. Die Auswahl eines von mehreren einer Taste zugeordneten Zeichens durch Betätigung der Taste erfolgt dabei durch das Vorhandensein von zusätzlichen Tasten, welche bestimmen, welches Zeichen von mehreren einer Taste zugeordneten Zeichen durch Betätigung der Taste eingegeben wird.

Der Erfindung liegt In Anbetracht dieses Standes der Technik die Aufgabe zugrunde, die Einstellbarkeit von Informationen repräsentierenden Signalen unter Meidung der beschriebenen Nachteile zu verbessern, Insbesondere hinsichtlich des Funktionsumfangs als auch hinsichtlich der Bedienung und/oder Handhabung, derart, dass in vorgebbaren Situationen, insbesondere sogenannten Notfalisituationen, automatisiert ein Abwelchen bzw. Modifizieren von ansonsten von dem Nutzer des mobilen Endgerätes vorgegebenen Signalparametern von Informationen repräsentierenden Signalen zielgerichtet ermöglicht wird.

Zur technischen Lösung dieser Aufgabe wird ein mobiles Endgerät mit den Merkmalen des Anspruchs 1 vorgeschlagen.

Das erfindungsgemäße Vorsehen einer Schalteinrichtung an einer Gehäuseseite des mobilen Endgerätes, mit der die von der Einrichtung zur Wiedergabe von Informationen repräsentierenden Signalen wiederzugebenden Signale einstellbar sind, vereinfacht insbesondere für ungeübte und/oder ältere Nutzer des erfindungsgemäßen mobilen Endgerätes die entsprechende Bedienung und/oder Handhabung im Hinblick auf eine entsprechende Auswahl der Signalart der wiederzugebenden Signale. Erfindungsgemäß ermöglicht die Schalteinrichtung dabei eine Einstellbarkeit der wiederzugebenden Signale ohne das ansonsten erforderliche umfangreiche und/oder aufwändige Tasteneingaben mit entsprechenden Menüs und/oder Menüführungen seitens des mobilen Endgerätes erforderlich sind. Entsprechende seitens des mobilen Endgerätes vorgesehene Menüs beziehungsweise Menüführungen, die eine Einstellbarkeit der Informationen repräsentierenden Signale hinsichtlich Signalparameter und/oder Art der Signalwiedergabe ermöglichen können vorteilhafterweise auch im Rahmen entsprechender Anwendungen, also ergänzend zu ansonsten möglichen Tasteneingaben, mittels der erfindungsgemäßen Schalteinrichtung vorgenommen werden.

Vorteilhafterweise weist die Schalteinrichtung wenigstens drei Schaltzustände zur Einstellung von wiederzugebenden Signalen auf.

Gemäß einer vorteilhaften Ausgestaltung der Erfindung weist die Schalteinrichtung wenigstens zwei unterschiedliche Schaltzustände für optisch und/oder vibrierend wiederzugebende Signale und/oder wenigstens drei Schaltzustände für akustisch wiederzugebende Signale auf.

Die Schaltzustände sind vorteilhafterweise miteinander kombinierbar, vorzugsweise mit einer booleschen Logik.

In einer besonders bevorzugten Ausgestaltung der Erfindung umfassen die zwei Schaltzustände für optisch und/oder vibrierend wiederzugebende Signale einen Schaltzustand "ein" und einen Schaltzustand "aus" und/oder die drei Schaltzustände für akustisch wiederzugebende Signale einen Schaltzustand "aus", einen Schaltzustand "ein" mit Signalen einer ersten Lautstärke und/oder Signallänge beziehungsweise Dauer und einen Schaltzustand "ein" mit Signalen einer zweiten Lautstärke und/oder Signallänge beziehungsweise Dauer.

Durch die verschiedenen Kombinationsmöglichkeiten der mittels der Schalteinrichtung einstellbaren Schaltzustände ist die Wiedergabe der Informationen repräsentierenden Signale umfangreich an verschiedene im Alltag gegebene Situationen anpassbar.

Vorteilhafterweise ist die Zuordnung der wiederzugebenden Signale hinsichtlich der mittels der Schalteinrichtung einstellbaren Schaltzustände seitens des mobilen Endgerätes nutzerindividuell einstellbar und/oder auswählbar, beispielsweise im Rahmen einer entsprechenden seitens des mobilen Endgerätes zur Einstellung derselben vorgesehenen Anwendung.

Gemäß einem weiteren vorteilhaften Vorschlag der Erfindung ist das erfindungsgemäße mobile Endgerät gekennzeichnet durch einen Schaltzustand der Schalteinrichtung, welcher ein automatisiertes Durchlaufen von anderen Schaltzuständen der Schalteinrichtung zugeordneten Signalwiedergaben ermöglicht. Durch diese Maßnahme eines vorteilhafterweise zyklischen Durchlaufens von Schaltzuständen ist eine weiter gesteigerte Anpassung der Signalwiedergaben des mobilen Endgerätes an nutzerindividuelle Bedürfnisse und/oder Gebrauchssituationen im Alltag gegeben.

Vorteilhafterweise sind die zu durchlaufenden anderen Schaltzustände der Schalteinrichtung zugeordneten Signalwiedergaben individuell einstellbar. Gemäß einer weiteren vorteilhaften Ausgestaltung der Erfindung sind die im Rahmen des Durchlaufens von anderen Schaltzuständen der Schalteinrichtung zugeordneten Signalwiedergaben wiederzugebenden Signale hinsichtlich ihrer Signalintensität steigerbar, wobei die Steigerung vorzugsweise stufenweise erfolgt. In einer besonders bevorzugten Ausgestaltung der Erfindung erfolgt die Steigerung im Rahmen von zeitlich aufeinanderfolgenden eingehenden Kommunikationsinformationen wenigstens eines bestimmten Kommunikationspartners, wobei die zeitliche Folge als auch der Kommunikationspartner vorteilhafterweise individuell einstellbar sind. Erfindungsgemäß werden so Änderungen hinsichtlich der Signalwiedergabe in Abhängigkeit von Kommunikationszuständen steigerbar durchgeführt.

Eine vorteilhafte Anwendung für derartige erfindungsgemäße Maßnahmen ist beispielsweise in Notfallsituationen gegeben, bei welchen ein oder mehrere bestimmte Kommunikationspartner zur Alarmierung des Nutzers des erfindungsgemäßen mobilen Endgerätes diesen mehrfach hintereinander anrufen. Das erfindungsgemäße mobile Endgerät erfasst dabei sowohl den beziehungsweise die Anruf- und Kommunikationspartner als auch die Anzahl der von diesen getätigten Anrufe, insbesondere die innerhalb einer vorgebbaren Zeitdauer erfolgten Anrufe und alarmiert bei Eintreten beziehungsweise Erreichen von dem Nutzer des mobilen Endgerätes vorgebbarer Situationszustände den Nutzer des mobilen Endgerätes mit entsprechenden Signalwiedergaben. So kann das erfindungsgemäße mobile Endgerät beispielsweise automatisiert in Notfallsituationen von einer von dem Nutzer zunächst vorgesehenen Stummschaltung selbstständig über leise, normale und schließlich laute bis sehr laute akustische Signalwiedergaben den Nutzer des mobilen Endgerätes über das Eintreten beziehungsweise Erfüllen einer vermeintlichen Notfallsituationen informieren, insbesondere derart, dass der Nutzer eine entsprechende Signalwiedergabe stufenweise gesteigert wahrnehmen kann.

In einer konkreten Ausgestaltung der Erfindung ist die Schalteinrichtung ein Schiebeschalter, vorzugsweise ein Schiebeschalter mit fest definierten Schaltpositionen. In einer weiteren Ausgestaltung der Erfindung ist die Schalteinrichtung ein Druckknopf und/oder Taster, welcher vorzugsweise durch Mehrfachbetätigung ein Einnehmen verschiedener Schaltzustände ermöglicht.

Eine weitere vorteilhafte Ausgestaltung der Erfindung ist gekennzeichnet durch wenigstens einen Schaltzustand, welcher eine besonders lange, laute, helle und/oder starke akustische, optische und/oder vibrierende Wiedergabe von seitens des Endgerätes nutzbaren Informationen repräsentierenden Signalen ermöglicht. Vorzugsweise ist dazu seitens des Endgerätes wenigstens ein weiterer Schaltzustand der Schalteinrichtung und/oder wenigstens eine weitere Schalteinrichtung vorgesehen.

In einer besonderes bevorzugten Ausgestaltung der Erfindung ist das mobile Endgerät ein in einem Mobilfunknetz betreibbares mobiles Endgerät, vorzugsweise ein Mobilfunktelefon.

Weitere Einzelheiten, Merkmale und Vorteile der Erfindung werden nachfolgend anhand des in der Figur der Zeichnung dargestellten Ausführungsbeispiels näher erläutert. Dabei zeigt:

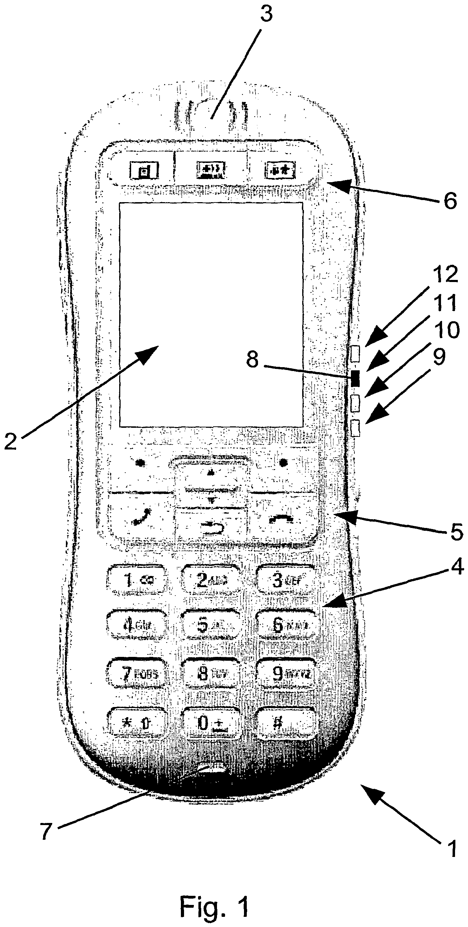

Fig. 1 ein Ausführungsbeispiel für ein erfindungsgemäßes mobiles Endgerät.

Fig. 1 zeigt ein in einem Mobilfunknetz betreibbares mobiles Endgerät 1 in Form eines Mobilfunktelefons 1. Das Mobilfunktelefon 1 weist ein Display 2 als Anzeigeeinrichtung zur optischen Wiedergabe von Informationen, einen Lautsprecher 3 als Anzeigeeinrichtung zur akustischen Wiedergabe von Informationen, eine Tastatur 4, eine Tastatur 5 und Tasten 6 sowie ein Mikrofon 7 als Eingabeeinrichtungen zur Erfassung von Informationen und/oder Bedieneingaben auf. Die Eingabeeinrichtungen 4, 5 und 6 des Mobilfunktelefons 1 weisen jeweils mehrere betätigbare Tasten auf. Die zwölf Tasten der als Eingabeeinrichtung dienenden Tastatur 4 dienen zur Erfassung von Informationen durch Eingabe von einzelnen Zeichen, beispielsweise Ziffern oder Buchstaben. Die sechs Tasten der als Eingabeeinrichtung dienenden Tastatur 5 dienen zur Steuerung von und/oder durch Funktionalitäten des Mobilfunktelefons 1 , beispielsweise zur Gesprächsannahme, Gesprächsbeendigung, Menüauswahl und dergleichen Funktionen. Die mittlere Taste der als Eingabeeinrichtung dienenden Tastatur 5 ist dabei als zwischen zwei Positionen kippbare Taste ausgebildet und erlaubt in entsprechenden Anwendungen ein Blättern beziehungsweise sogenanntes Scrollen, insbesondere für eine weitergehende Menü- und/oder Funktionsauswahl. Die drei nebeneinander angeordneten Tasten der Eingabeeinrichtung 6 dienen vorliegend einer weiteren Nutzung von seitens der Anzeigeeinrichtung 2 wiedergegebenen Kommunikationsinformationen. Dabei wird eine entsprechende Nutzung der Kommunikationsinformationen durch Betätigung einer der entsprechenden Tasten der Eingabeeinrichtung 6 ausgelöst.

Die in Fig. 1 links dargestellte Taste der Eingabeeinrichtung 6 ist vorliegend ferner mit einer Hintergrundbeleuchtung versehen und kann insbesondere zur optischen Wiedergabe von seitens des Endgerätes nutzbaren Informationen repräsentierenden Signalen diese durch entsprechendes Leuchten, vorzugsweise mit einem Blinklicht, wiedergeben. Ferner können Informationen repräsentierende Signale in optischer Form seitens der Anzeigeeinrichtung 2 wiedergegeben werden, beispielsweise durch ein entsprechendes Logo, Text oder dergleichen optischer Informationen.

Die Wiedergabe von akustischen Informationen repräsentierenden Signalen seitens des Mobilfunktelefons 1 erfolgt vorliegend über den als Anzeigeeinrichtung dienenden Lautsprecher 3. Alternativ kann die Wiedergabe über einen weiteren in Fig. 1 nicht explizit dargestellten Lautsprecher zur akustischen Wiedergabe von seitens des Mobilfunktelefons nutzbaren Informationen repräsentierenden Signalen erfolgen.

Das Mobilfunktelefon 1 weist vorliegend ferner eine in Fig. 1 nicht explizit dargestellte Vibrationseinrichtung auf, welche eine vibrierende Wiedergabe von seitens des Mobilfunktelefons nutzbaren Informationen repräsentierenden Signalen ermöglicht.

Die Einrichtungen zur optischen, akustischen und/oder vibrierenden Wiedergabe von seitens des Mobilfunktelefons nutzbaren Informationen, insbesondere Kommunikationsinformationen wie eingehende Anrufe, Kurzmitteilungen oder dergleichen, werden von einem seitens des Mobilfunktelefons 1 vorgesehenen Signalgeber entsprechend aufbereitet und den Einrichtungen 2, 3 und/oder 6 zur Signalwiedergabe zugeführt.

Zur Einstellung der von den jeweiligen Einrichtungen zur Wiedergabe von Informationen repräsentierenden Signalen wiederzugebenden Signale weist das Mobilfunktelefon 1 vorliegend an der in Fig. 1 rechts gelegenen Gehäuseseite eine Schalteinrichtung 8 auf. Die Schalteinrichtung 8 ist vorliegend als Schiebeschalter 8 ausgebildet, welcher vorliegend in vier fest definierte unterschiedliche Schaltpositionen 9, 10, 11 und 12 verbracht werden kann. Die einzelnen Schaltpositionen 9, 10, 11 und 12 der Schalteinrichtung 8 entsprechen dabei jeweils einem Schaltzustand der Schalteinrichtung 8, in welchem von den Einrichtungen 2, 3 und 6 zur Wiedergabe von Informationen repräsentierenden Signalen wiederzugebende Signale jeweils unterschiedlich wiedergebbar sind.

Bei dem in Fig. 1 dargestellten Ausführungsbeispiel befindet sich der Schiebeschalter 8 in der Schaltposition 11, was in Fig. 1 durch die schwarz dargestellte Position 11 der als Schiebeschalter ausgebildeten Schalteinrichtung 8 dargestellt ist. Die von dem Schiebeschalter 8 einnehmbaren weiteren Positionen 9, 10 und 12 sind in Fig. 1 vorliegend symbolisch grau dargestellt.

Bei dem in Fig. 1 dargestellten Ausführungsbeispiel sind den Schaltpositionen 9 bis 12 der Schalteinrichtung 8 vorliegend folgende Schaltzustände zur Wiedergabe von seitens der Einrichtungen 2, 3 und 6 zur Wiedergabe von Informationen repräsentierenden Signalen wiederzugebende Signale zugeordnet:
- Bei Schaltposition 9 der Schalteinrichtung 8 sind vorliegend die Einrichtungen zur optischen, akustischen und vibrierenden Wiedergabe von seitens des Endgerätes nutzbaren Informationen repräsentierenden Signalen abgeschaltet. Das Mobilfunktelefon 1 befindet sich dementsprechend im sogenannten "Silent"-Mode.
- In der Schaltposition 10 des Schiebeschalters 8 sind vorliegend die Einrichtungen zur optischen und akustischen Wiedergabe von seitens des Endgerätes 1 nutzbaren Informationen repräsentierenden Signalen ausgeschaltet und die Einrichtung zur vibrierenden Wiedergabe von seitens des Endgerätes 1 nutzbaren Informationen repräsentierenden Signalen eingeschaltet. Das Endgerät 1 befindet sich dementsprechend im sogenannten "Vibrate"-Mode.
- Bei der - wie in Fig. 1. dargestellten - Einnahme der Schaltposition 11 des Schiebeschalters 8 ist vorliegend die Einrichtung 3 zur akustischen Wiedergabe seitens des Endgerätes 1 nutzbaren Informationen repräsentierenden Signalen eingeschaltet. Diese wird dabei vorliegend mit einer für diesen Betriebszustand vorgegebenen mittleren Lautstärke betrieben, wobei Informationen repräsentierende Signale mit beziehungsweise für eine Signaldauer von etwa 15 Sekunden wiedergegeben werden. Bei dem vorliegenden Ausführungsbeispiel sind dabei die Einrichtung zur optischen und vibrierenden Wiedergabe von seitens des Endgerätes 1 nutzbaren Informationen repräsentierenden Signalen ausgeschaltet. Das Mobilfunktelefon 1 befindet sich dementsprechend im sogenannten "Normal-Mode".
- Bei der Schaltposition 12 des Schiebeschalters 8 sind vorliegend die Einrichtungen zur optischen, akustischen und vibrierenden Wiedergabe von seitens des Endgerätes 1 nutzbaren Informationen repräsentierenden Signalen eingeschaltet. Die akustische Wiedergabe von Signalen erfolgt dabei vorliegend mit maximal möglicher Lautstärke für beziehungsweise mit maximal möglicher Signaldauer, welche vorzugsweise der vom Mobilfunknetz vorgegebenen maximalen Zeitdauer, dem sogenannten "Network Timeout", vorgegeben ist. Das Mobilfunktelefon 1 befindet sich dementsprechend im sogenannten "Loud & Long"-Mode.

In einem weiteren hier nicht explizit dargestellten Ausführungsbeispiel eines Mobilfunktelefons 1 sind über die Schalteinrichtung 8 die Einrichtungen zur optischen, akustischen und vibrierenden Wiedergabe von Informationen repräsentierenden Signalen hinsichtlich ihrer Schaltzustände unter Nutzung einer booleschen Logik miteinander kombinierbar. Die möglichen Schaltzustände und Kombinationsmöglichkeiten sind in den nachfolgenden Tabellen wiedergegeben. In einer bevorzugten Ausgestaltung der Erfindung sind verschiedene der in den Tabellen wiedergegebenen Schaltzustände nutzerindividuell auswählbar und einer Schalteinrichtung zuordbar, vorteilhafterweise über ein seitens des Mobilfunktelefons 1 vorgesehenes Auswahlmenü. Gemäß zweitem Ausführungsbeispiel sind folgende Schaltzustände für Kombinationen der Einrichtungen zur optischen, akustischen und/oder vibrierenden Wiedergabe von Informationen repräsentierenden Signalen nutzbar:

| **Profil/Modus** | **optische Wiedergabe** | **vibrierende Wiedergabe** | **akustische Wiedergabe** |
|---|---|---|---|
| A | Aus | aus | aus |
| A | Ein | aus | aus |
| A | Aus | Ein | aus |
| A | Ein | Ein | aus |
| A | Aus | aus | ein |
| A | Ein | aus | ein |
| A | Aus | Ein | ein |
| A | Ein | Ein | ein |

| **Profil/Modus** | **Optische Wiedergabe** | **vibrierende Wiedergabe** | **akustische Wiedergabe** |
|---|---|---|---|
| B | Aus | aus | aus |
| B | Ein | aus | aus |
| B | Aus | Ein | aus |
| B | ein | Ein | aus |
| B | aus | aus | ein |
| B | ein | aus | ein |
| B | aus | Ein | ein |
| B | ein | Ein | ein |

Die Profile/Modi A, B unterscheiden sich vorliegend hinsichtlich der für eine akustische Wiedergabe vorgesehenen Signallautstärke. Weitere Modi C, D und dergleichen mit weiteren Signalparameter vorgebenden Eigenschaften sind als weitere Ausführungsbeispiele für Schaltzustände der Schalteinrichtung eines erfindungsgemäßen mobilen Endgerätes nutzbar.

Darüber hinaus sind weitere Signalparameter der in den verschiedenen Schaltzuständen den Einrichtungen zur optischen, akustischen und/oder vibrierenden Wiedergabe von Informationen repräsentierenden Signalen als weitere Eigenschaften zuordbar, beispielsweise die Vorgabe bestimmter Lautstärkepegel, Signaldauern und/oder dergleichen.

Das in der Figur der Zeichnung dargestellte Ausführungsbeispiel und die im Zusammenhang mit diesem beschriebenen weiteren Ausführungsformen dienen lediglich der Erläuterung der Erfindung und sind für diese nicht beschränkend.

### Bezugszeichenliste

- 1: Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Tasten
- 6: Eingabeeinrichtung/Tasten
- 7: Eingabeeinrichtung/Mikrofon
- 8: Schalteinrichtung/Schiebeschalter
- 9: Position Schalteinrichtung/Schiebeschalter (8)
- 10: Position Schalteinrichtung/Schiebeschalter (8)
- 11: Position Schalteinrichtung/Schiebeschalter (8)
- 12: Position Schalteinrichtung/Schiebeschalter (8)

## Patentansprüche

1. Mobiles Endgerät (1) zur Nutzung in einem Telekommunikationsnetz, vorzugsweise einem Mobilfunknetz, mit wenigstens einer Einrichtung (2, 3, 6) zur optischen, akustischen und/oder vibrierenden Wiedergabe von seitens des Endgerätes (1) nutzbaren Informationen repräsentierenden Signalen, wobei wenigstens einer Information wenigstens ein die Information repräsentierendes Signal mit festen und/oder einstellbaren Signalparametern zuordbar ist, und mit einer an einer Gehäuseseite des mobilen Endgerätes (1) angeordneten Schalteinrichtung (8), mit welcher die von der Einrichtung (2, 3, 6) zur Wiedergabe von Informationen repräsentierenden Signalen wiederzugebenden Signale einstellbar sind, und welche wenigstens drei Schaltzustände zur Einstellung von wiederzugebenden Signalen aufweist,
**gekennzeichnet durch**
einen Schaltzustand der Schalteinrichtung (8), welcher ein automatisiertes Durchlaufen von anderen Schaltzuständen der Schalteinrichtung (8) zugeordneten Signalwiedergaben ermöglicht, wobei die im Rahmen des Durchlaufens von anderen Schaltzuständen der Schalteinrichtung (8) zugeordneten Signalwiedergaben wiederzugebenden Signale hinsichtlich ihrer Signalintensität steigerbar sind, und die Steigerung im Rahmen von zeitlich aufeinanderfolgenden eingehenden Kommunikationsinformationen wenigstens eines bestimmten Kommunikationspartners erfolgt, wobei die zeitliche Folge als auch der Kommunikationspartner individuell einstellbar sind.

2. Endgerät (1) nach Anspruch 1, **dadurch gekennzeichnet, dass** die Schalteinrichtung (8) wenigstens zwei unterschiedliche Schaltzustände für optisch und/oder vibrierend wiederzugebende Signale und/oder wenigstens drei Schaltzustände für akustisch wiederzugebende Signale aufweist.

3. Endgerät (1) nach Anspruch 2, **dadurch gekennzeichnet, dass** die Schaltzustände miteinander kombinierbar sind, vorzugsweise mit einer booleschen Logik.

4. Endgerät (1) nach Anspruch 2 oder Anspruch 3, **dadurch gekennzeichnet, dass** die zwei Schaltzustände für optisch und/oder vibrierend wiederzugebende Signale einen Schaltzustand "ein" und einen Schaltzustand "aus" umfassen und/oder die drei Schaltzustände für akustisch wiederzugebende Signale einen Schaltzustand "aus", einen Schaltzustand "ein" mit Signalen einer ersten Lautstärke und/oder Signallänge und einen Schaltzustand "ein" mit Signalen einer zweiten Lautstärke und/oder Signallänge umfassen.

5. Endgerät (1) nach einem der Ansprüche 1 bis 4, **dadurch gekennzeichnet, dass** die zu durchlaufenden anderen Schaltzustände der Schalteinrichtung (8) zugeordneten Signalwiedergaben individuell einstellbar sind.

6. Endgerät (1) nach einem der Ansprüche 1 bis 5, **dadurch gekennzeichnet, dass** das die Steigerung stufenweise erfolgt.

7. Endgerät (1) nach einem der Ansprüche 1 bis 6, **dadurch gekennzeichnet, dass** die Schalteinrichtung (8) ein Schiebeschalter (8) ist, vorzugsweise ein Schiebeschalter (8) mit fest definierten Schaltpositionen (9, 10, 11, 12) für Schaltzustände.

8. Endgerät (1) nach einem der Ansprüche 1 bis 6, **dadurch gekennzeichnet, dass** die Schalteinrichtung (8) ein Druckknopf und/oder Taster ist, welcher vorzugsweise durch Mehrfachbetätigung ein Einnehmen verschiedener Schaltzustände ermöglicht.

9. Endgerät (1) nach einem der Ansprüche 1 bis 8, **gekennzeichnet durch** wenigstens einen Schaltzustand, welcher eine besonders lange, laute, helle und/oder starke akustische, optische und/oder vibrierende Wiedergabe von seitens des Endgerätes nutzbaren Informationen repräsentierenden Signalen ermöglicht.

10. Endgerät (1) nach Anspruch 9, **dadurch gekennzeichnet, dass** zur besonders langen, lauten, hellen und/oder starken akustischen, optischen und/oder vibrierenden Wiedergabe von seitens des Endgerätes nutzbaren Informationen repräsentierenden Signalen wenigstens ein weiterer Schaltzustand der Schalteinrichtung (8) und/oder wenigstens eine weitere Schalteinrichtung vorgesehen ist.

11. Endgerät (1) nach einem der Ansprüche 1 bis 10, **dadurch gekennzeichnet, dass** dieses ein in Mobilfunknetzen betreibbares mobiles Endgerät (1), vorzugsweise ein Mobilfunktelefon (1), ist.

## Claims

1. A mobile terminal (1) for the use in a telecommunication network, preferably a mobile network, comprising a device (2, 3, 6) for the optical, acoustic and/or vibrating reproduction of signals representing information which can be used by the mobile terminal (1), wherein at least one signal representing one information item and comprising fixed and/or adjustable signal parameters can be allocated to the at least one information item, and comprising a switch unit (8) arranged on a housing side of the mobile terminal (1), by means of which the signals to be reproduced by the device (2, 3, 6) for the reproduction of signals representing information can be adjusted, and which comprises at least three switching states for the adjustment of signals to be reproduced,
**characterized by**
a switching state of the switch unit (8) which enables an automated passage through signal reproductions allocated to other switching states of the switch unit (8), wherein the signals to be reproduced within the scope of the passage through signal reproductions allocated to other switching states of the switch unit (8) can be increased with respect to their signal intensity, and the increase is realized within the scope of successively arriving communication information of at least one special communication partner, wherein the chronological succession as well as the communication partner can be individually set.

2. A terminal (1) according to claim 1, **characterized in that** the switch unit (8) comprises at least two different switching states for signals which shall be reproduced in an optical and/or vibrating manner and/or at least three switching states for signals to be reproduced acoustically.

3. A terminal (1) according to claim 2, **characterized in that** the switching states can be combined with each other, preferably by means of a Boolean logic.

4. A terminal (1) according to claim 2 or claim 3, **characterized in that** the two switching states for signals to be reproduced in an optical and/or vibrating manner comprise a switching state "on" and a switching state "off" and/or the three switching states for signals to be reproduced acoustically comprise a switching state "off", a switching state "on" comprising signals of a first loudness and/or signal length and a switching state "on" comprising signals of a second loudness and/or signal length.

5. A terminal (1) according to one of the claims 1 through 4, **characterized in that** the signal reproductions allocated to other switching states of the switch unit (8) and to be passed through can be individually set.

6. A terminal (1) according to one of the claims 1 through 5, **characterized in that** the increase is realized step-by-step.

7. A terminal (1) according to one of the claims 1 through 6, **characterized in that** the switch unit (8) is a slide switch (8), preferably a slide switch (8) comprising firmly defined switching positions (9, 10, 11, 12) for switching states.

8. A terminal (1) according to one of the claims 1 through 6, **characterized in that** the switch unit (8) is a push-button and/or calipers which enable(s) to take different switching states preferably by multiple actuation.

9. A terminal (1) according to one of the claims 1 through 8, **characterized by** at least one switching state which enables an especially long, loud, bright and/or strong acoustic, optical and/or vibrating reproduction of signals representing information which can be used by the terminal.

10. A terminal (1) according to claim 9, **characterized in that** at least one further switching state of the switch unit (8) and/or at least one further switch unit is provided for the especially long, loud, bright and/or strong acoustic, optical and/or vibrating reproduction of signals representing information which can be used by the terminal.

11. A terminal (1) according to one of the claims 1 through 10, **characterized in that** this one is a mobile terminal (1), preferably a mobile phone (1) which can be operated in mobile networks.

## Revendications

1. Terminal mobile (1) destiné à l'utilisation dans un réseau de télécommunication, de préférence un réseau radio mobile, comprenant un dispositif (2, 3, 6) pour la reproduction optique, acoustique et/ou vibrante des signaux représentant des informations utilisables par le terminal (1), dans lequel au moins un signal représentant une information et comprenant des paramètres de signal fixes et/ou ajustables peut être attribué à l'au moins une information, et comprenant un dispositif de commutation (8) disposé sur une face de boîtier du terminal mobile (1), à l'aide duquel on peut ajuster les signaux à reproduire par le dispositif (2, 3, 6) pour la reproduction des signaux représentant des informations, et lequel comprend au moins trois états de commutation pour l'ajustement des signaux à reproduire,
**caractérisé par**
un état de commutation du dispositif de commutation (8), qui permet de parcourir de manière automatisée des reproductions de signaux attribuées à d'autres états de commutation du dispositif de commutation (8), les signaux à reproduire dans le cadre du parcours des reproductions de signaux attribuées à d'autres états de commutation du dispositif de commutation (8) étant susceptibles d'être intensifiés par rapport à leur intensité de signal, et l'intensification se faisant dans le cadre des informations de communication arrivant successivement d'au moins un certain partenaire de communication, la succession temporelle et le partenaire de communication étant ajustables individuellement.

2. Terminal (1) selon la revendication 1, **caractérisé en ce que** le dispositif de commutation (8) comprend au moins deux états de commutation différents pour des signaux à reproduire de manière optique et/ou vibrante et/ou au moins trois états de commutation pour des signaux à reproduire acoustiquement.

3. Terminal (1) selon la revendication 2, **caractérisé en ce qu'**on peut combiner les états de commutation les uns avec les autres, de préférence à l'aide d'une logique booléenne.

4. Terminal (1) selon la revendication 2 ou revendication 3, **caractérisé en ce que** les deux états de commutation pour des signaux à reproduire de manière optique et/ou vibrante comprennent un état de commutation dit "marche" et un état de commutation dit "arrêt" et/ou les trois états de commutation pour des signaux à reproduire acoustiquement comprennent un état de commutation dit "arrêt", un état de commutation dit "marche" avec des signaux d'une première intensité sonore et/ou longueur de signal et un état de commutation dit "marche" avec des signaux d'une seconde intensité sonore et/ou longueur de signal.

5. Terminal (1) selon l'une des revendications 1 à 4, **caractérisé en ce qu'**on peut ajuster individuellement les reproductions de signaux à parcourir et attribués à d'autres états de commutation du dispositif de commutation (8).

6. Terminal (1) selon l'une des revendications 1 à 5, **caractérisé en ce que** l'intensification se fait par étapes.

7. Terminal (1) selon l'une des revendications 1 à 6, **caractérisé en ce que** le dispositif de commutation (8) est un interrupteur à coulisse (8), de préférence un interrupteur à coulisse (8) ayant des positions de commutation fermement définies (9, 10, 11, 12) pour des états de commutation.

8. Terminal (1) selon l'une des revendications 1 à 6, **caractérisé en ce que** le dispositif de commutation (8) est un bouton de pression et/ou bouton de touche, qui permet de prendre des états de commutation différents, de préférence à l'aide d'actionnement multiple.

9. Terminal (1) selon l'une des revendications 1 à 8, **caractérisé par** au moins un état de commutation qui permet une reproduction acoustique, optique et/ou vibrante particulièrement longue, intense, claire et/ou forte des signaux représentant des informations utilisables par le terminal.

10. Terminal (1) selon la revendication 9, **caractérisé en ce que** l'au moins un autre état de commutation du dispositif de commutation (8) et/ou l'au moins un autre dispositif de commutation est prévu pour la reproduction acoustique, optique et/ou vibrante particulièrement longue, intense, claire et/ou forte des signaux représentant des informations utilisables par le terminal.

11. Terminal (1) selon l'une des revendications 1 à 10, **caractérisé en ce que** celui-ci est un terminal mobile (1) opérable dans des réseaux radio mobiles, de préférence un téléphone mobile (1).
